Europäisches Patentamt

(19) European Patent Office

Office européen des brevets

(11) Publication number: **0 133 289**
**B1**

(12) **EUROPEAN PATENT SPECIFICATION**

(45) Date of publication of patent specification: 28.09.88

(51) Int. Cl.⁴: **C 04 B 35/58,** C 04 B 37/02

(21) Application number: 84108813.1

(22) Date of filing: 25.07.84

(54) Wear-resistant member and manufacturing method thereof.

(30) Priority: 29.07.83 JP 139270/83

(43) Date of publication of application:
20.02.85 Bulletin 85/08

(45) Publication of the grant of the patent:
28.09.88 Bulletin 88/39

(84) Designated Contracting States:
DE FR GB

(56) References cited:
EP-A-0 073 523
GB-A-1 365 126
JP-A-83 064 269
JP-A-83 064 271
JP-A-83 064 273
JP-A-83 095 655
US-A-1 887 373
US-A-3 667 099

CHEMICAL ABSTRACTS, vol. 99, no. 2, 1983,
page 241, abstract 9798t, COLUMBUS, OHIO,
(US)

(73) Proprietor: KABUSHIKI KAISHA TOSHIBA
72, Horikawa-cho Saiwai-ku
Kawasaki-shi Kanagawa-ken 210 (JP)

(72) Inventor: Komatsu, Michiyasu c/o Patent
Division
Kabushiki Kaisha Toshiba 1-1 Shibaura 1-chome
Minato-ku Tokyo 105 (JP)
Inventor: Miyano, Tadashi c/o Patent Division
Kabushiki Kaisha Toshiba 1-1 Shibaura 1-chome
Minato-ku Tokyo 105 (JP)
Inventor: Okada, Syoji c/o Patent Division
Kabushiki Kaisha Toshiba 1-1 Shibaura 1-chome
Minato-ku Tokyo 105 (JP)
Inventor: Tanaka, Shun-ichiro c/o Patent
Division
Kabushiki Kaisha Toshiba 1-1 Shibaura 1-chome
Minato-ku Tokyo 105 (JP)
Inventor: Ikeda, Kazuo c/o Patent Division
Kabushiki Kaisha Toshiba 1-1 Shibaura 1-chome
Minato-ku Tokyo 105 (JP)
Inventor: Sayano, Akio c/o Patent Division
Kabushiki Kaisha Toshiba 1-1 Shibaura 1-chome
Minato-ku Tokyo 105 (JP)

**0 133 289**

(56) References cited:
**CHEMICAL ABSTRACTS, vol. 93, no. 16, October 1980, page 285, abstract 154757j, COLUMBUS, OHIO, (US).**

**CHEMICAL ABSTRACTS, vol. 95, no. 1, July 1981, page 11507, abstracts 115151j, COLUMBUS, OHIO, (US).**

**CHEMICAL ABSTRACTS, vol. 97, no. 10, September 1980, page 329, abstract 77530h, COLUMBUS, OHIO, (US).**

(74) Representative: **Henkel, Feiler, Hänzel & Partner Möhlstrasse 37 D-8000 München 80 (DE)**

## Description

The present invention relates to a wear-resistant member comprising of a sintered ceramic body and a metal member bonded thereto as well as a manufacturing method thereof.

Since a sintered ceramic body, in particular, an $Si_3N_4$-based sintered ceramic body, has good mechanical characteristics at high temperatures, it is conventionally used as a material for various structures.

However, such a sintered ceramic body does not have sufficient resistance against wear and fracture. Therefore, sintered ceramic bodies are merely used as a wear-resistant member such as a bearing or a cutting tool. If used as such a member, the sintered ceramic body does not have a sufficient tool life.

On the other hand, a cutting tool is conventionally manufactured by integrally brazing a hard-metal chip to a shank or by clamping it thereto. However, a hard metal cannot be used for high-speed cutting or high-load work such as grooving of a wood material.

It is an object of the present invention to provide a wear-resistant member comprising a sintered ceramic body and a metal member bonded thereto which can perform a high-load work and a manufacturing method thereof.

According to an aspect of the present invention, there is provided a wear-resistant member comprising a sintered ceramic body and a metal member bonded to said ceramic body by coating the surface of said ceramic body opposing the metal member with a lithium molybdate solution, heating the coated body to form a conductive layer, nickel plating said conductive layer and soldering the plated nickel layer with the metal member, said sintered ceramic body essentially consisting of 0.1 to 15% by weight of at least one compound selected from the group consisting of molybdenum carbide, niobium carbide, hafnium carbide, tantalum carbide, molybdenum silicide, niobium silicide, hafnium silicide, tantalum silicide, molybdenum boride, niobium boride, hafnium boride and tantalum boride; 2 to 20% by weight of a boundary phase selected from the group consisting of Si-Y-Al-O-N and Si-Y-Al-O-N-B; and a balance of β-silicon nitride optionally containing 0.1 to 10% by weight of AlN or 0.1 to 5% by weight of $TiO_2$.

This invention can be more fully understood from the following detailed description when taken in conjunction with the accompanying drawings, in which:

Fig. 1 is a representation showing the structure of the sintered ceramic body part of the wear-resistant member according to the invention;

Fig. 2 is a perspective view of a wear-resistant member of another embodiment of the present invention.

According to the present invention, when a content of at least one material selected from the group consisting of carbides, silicides and borides of Mo, Nb, Hf and Ta is less than 0.1% by weight, a hardness, wear-resistance, and bending strength of an obtained sintered ceramic body cannot be sufficiently improved. On the other hand, when the content of the material described above is higher than 15% by weight, a value ($K_lC$) of the fracture resistance is lowered, and a mechanical strength of the sintered ceramic body is also lowered. Therefore, the content of the material described above must fall within the range described above.

When the content of a boundary phase formed of Si-Y-Al-O-N or Si-Y-Al-O-N-B which constitutes a sintered ceramic body of the present invention is lower than 2% by weight, it is difficult to sufficiently sinter the $Si_3N_4$. However, when the content of the boundary phase is higher than 20% by weight, the mechanical strength and heat/impact resistance of the sintered ceramic body are lowered. Therefore, the content of the boundary phase must fall within the range described above.

The content of β-silicon nitride is the balance of the total weight of the sintered ceramic body, obtained by subtracting the percentage contents of the above two components from 100% by weight, and which is preferably more than 70% by weight.

A method of manufacturing a wear-resistant member of the present invention comprises the steps of: preparing a powder mixture essentially consisting of 0.1 to 15% by weight of at least one material selected from the group consisting of molybdenum, niobium, hafnium, tantalum, molybdenum carbide, niobium carbide, hafnium carbide, tantalum carbide, molybdenum silicide, niobium silicide, hafnium silicide, tantalum silicide, molybdenum boride, niobium boride, hafnium boride and tantalum boride, 0.5 to 20% by weight of a sintering accelerator formed of yttrium oxide and aluminum oxide; and a balance of α-silicon nitride optionally containing 0.1 to 10% by weight of AlN or 0.1 to 5% by weight of $TiO_2$; sintering said powder mixture in a predetermined mold at a temperature of 1,600 to 1,800°C and at a pressure of 50 to 500 $kg/cm^2$ so as to obtain a sintered ceramic body; and bonding said sintered ceramic body to a metal member by coating the surface of said ceramic body opposing the metal member with a lithium molybdate solution, heating the coated body to form a conductive layer, nickel plating said conductive layer and soldering the plated nickel layer with the metal member.

Another method of manufacturing a wear-resistant member of the present invention comprises the steps of: preparing a powder mixture essentially consisting of 0.1 to 10% by weight of at least one material selected from the group consisting of molybdenum, niobium, hafnium, tantalum, molybdenum carbide, niobium carbide, hafnium carbide, tantalum carbide, molybdenum silicide, niobium silicide, hafnium silicide, tantalum silicide, molybdenum boride, niobium boride, hafnium boride and tantalum boride, 0.5 to 20% by weight of a sintering accelerator formed of

yttrium oxide and aluminum oxide; and a balance of α-silicon nitride optionally containing 0.1 to 10% by weight of AlN or 0.1 to 5% by weight of $TiO_2$; molding said powder mixture into a predetermined form and sintering the molded mixture in a non-oxidizing atmosphere at a temperature of 1,700 to 1,800°C to obtain a sintered ceramic body; and bonding said sintered ceramic body to a metal member by coating the surface of said ceramic body opposing the metal member with a lithium molybdate solution, heating the coated body to form a conductive layer, nickel plating said conductive layer and soldering the plated nickel layer with the metal member.

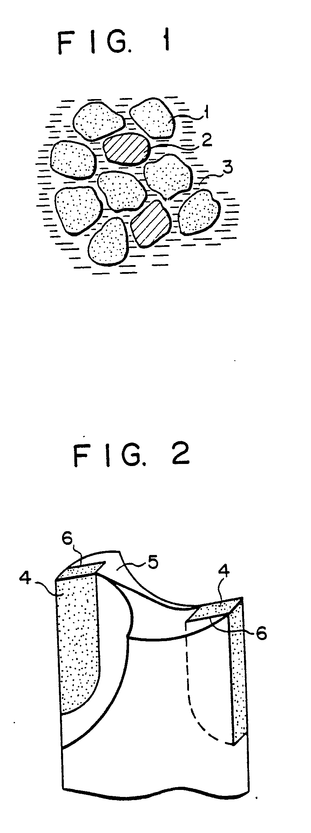

Fig. 1 schematically shows a sintered ceramic body of an embodiment according to the present invention. In Fig. 1, reference numerals 1 and 2 respectively denote $Si_3N_4$ particles and $MoSi_2$ particles. A boundary phase 3 is formed between these particles 1 and 2. Components, e.g., Y, Al and O constituting the boundary phase 3, are supplied from $Y_2O_3$ and $Al_2O_3$, which are used as sintering accelerators.

The wear-resistant member according to the present invention, formed of the sintered ceramic body shown in Fig. 1, has not only good mechanical strength and high heat/impact resistance, but also a good wear resistance. The wear-resistant member if bonded to a metal member can be effectively used as, e.g., a cutting tool, a metal processing tool, and the like which can perform high-load work.

In the case wherein the sintered ceramic body is bonded to a metal member, in particular, to a steel member to prepare a cutting tool, the tool is prepared in the following manner.

Onto the sintered ceramic body there is coated a lithium molybdate solution and heated to form a conductive layer. Thereafter, nickel plating is performed on the conductive layer so that the sintered ceramic body is bonded to the metal member through the plated nickel layer and solder.

The present invention will be described by way of examples hereafter.

Example 1

85% by weight of α-type $Si_3N_4$, 5% by weight of $Y_2O_3$, 4% by weight of $Al_2O_3$, 3% by weight of AlN, and 3% by weight of $Mo_2C_3$ were mixed and pulverized by a ball mill to form a powder mixture. 7% by weight of paraffin was added to the obtained powder mixture as a binder. Thereafter, the resultant powder mixture was molded at room temperature at a molding pressure of 700 $kg/cm^2$ to obtain a plate-shaped body having a length of 100 mm, a width of 100 mm, and a thickness of 30 mm.

The obtained body was heated to a temperature of 700°C to remove the binder. Thereafter, the resultant body was sintered in a nitrogen atmosphere at a temperature of 1,750°C for 120 minutes so as to obtain the sintered ceramic body.

The obtained sintered ceramic body essentially consisted of 7.5% by weight of $MoSi_2$, 15% by weight of the boundary phase formed of Si-Y-Al-O-N, and the balance of β type $Si_3N_4$.

The obtained sintered ceramic body had a $K_IC$ value ($MNm^{-3/2}$) of 7.5, a bending strength of 100 $kg/mm^2$, and a wear amount ($mm^3/kg \cdot mm$) of $1 \times 10^{-6}$.

For the purpose of comparison, another sintered ceramic body was formed following the same procedures as those of Example 1 except for the step of adding $MoSi_2$. This other obtained sintered ceramic body had a $K_IC$ value of 5.5, a bending strength of 85 $kg/mm^2$, and a wear amount ($mm^3/kg \cdot mm$) of $5 \times 10^{-6}$.

Example 2

A chip 4 of a sintered ceramic body was formed by using the same components and in the same manner as those of Example 1, as shown in Fig. 2. A lithium molybdate solution was coated on an opposing surface of the chip 4 with a metal member and was heated to form a conductive layer thereon. Thereafter, a nickel plating layer was formed on the conductive layer.

Then, a steel member 5, molded in a predetermined form and being in contact with the nickel plating layer of the chip 4 through an Ag-Cu solder 6, was heated to be bonded thereto, thereby obtaining a wood work tool.

According to this wood work tool, work along a vertical direction with respect to fibers of a wood, which could not be performed by a conventional tool, could be easily performed at a feed speed of 1.5 m/min.

However, with a conventional cutting tool having a chip formed of 88% by weight of $Si_3N_4$ and 12% by weight of $Y_2O_3$-$Al_2O_3$-based glass, work along the direction described above was performed only at a feed speed of 0.7 m/min, and during this work, breakage thereof occurred. Furthermore, a conventional blade of a hard metal still had a low work efficiency of a feed speed of 0.28 m/min.

**Claims**

1. A wear-resistant member comprising a sintered ceramic body and a metal member bonded to said sintered ceramic body, said sintered ceramic body essentially consisting of: 0.1 to 15% by weight of at least one metal compound selected from the group consisting of molybdenum carbide, niobium carbide, hafnium carbide, tantalum carbide, molybdenum silicide, niobium silicide, hafnium silicide, tantalum silicide, molybdenum boride, niobium boride, hafnium boride and tantalum boride; 2 to 20% by weight of a boundary phase selected from the group consisting of Si-Y-Al-O-N and Si-Y-Al-O-N-B; and a balance of β-silicon nitride optionally containing 0.1 to 10% by weight of AlN or 0.1 to 5% by weight of $TiO_2$; said sintered ceramic body being bonded to said metal member by coating the surface of said ceramic body opposing the metal member with a lithium molybdate solution, heating the coated body to form a conductive layer, nickel plating said conductive layer and soldering the plated nickel layer with the metal member.

2. A method of manufacturing a wear-resistant member comprising a sintered ceramic body and a metal member bonded to said sintered ceramic body, said method comprising the steps of: preparing a powder mixture essentially consisting of 0.1 to 15% by weight of at least one material selected from the group consisting of molybdenum, niobium, hafnium, tantalum, molybdenum carbide, niobium carbide, hafnium carbide, tantalum carbide, molybdenum silicide, niobium silicide, hafnium silicide, tantalum silicide, molybdenum boride, niobium boride, hafnium boride and tantalum boride, 0.5 to 20% by weight of a sintering accelerator formed of yttrium oxide and aluminum oxide; and a balance of $\alpha$-silicon nitride optionally containing 0.1 to 10% by weight of AlN or 0.1 to 5% by weight of $TiO_2$; sintering said powder mixture in a predetermined mold at a temperature of 1,600 to 1,800°C and at a pressure of 50 to 500 $kg/cm^2$ so as to obtain a sintered ceramic body; and bonding said sintered ceramic body to a metal member by coating the surface of said ceramic body opposing the metal member with a lithium molybdate solution, heating the coated body to form a conductive layer, nickel plating said conductive layer and soldering the plated nickel layer with the metal member.

3. A method of manufacturing a wear-resistant member comprising a sintered ceramic body and a metal member bonded to said sintered ceramic body, said method comprising the steps of: preparing a powder mixture essentially consisting of 0.1 to 10% by weight of at least one material selected from the group consisting of molybdenum, niobium, hafnium, tantalum, molybdenum carbide, niobium carbide, hafnium carbide, tantalum carbide, molybdenum silicide, niobium silicide, hafnium silicide, tantalum silicide, molybdenum boride, niobium boride, hafnium boride and tantalum boride, 0.5 to 20% by weight of a sintering accelerator formed of yttrium oxide and aluminum oxide; and a balance of $\alpha$-silicon nitride optionally containing 0.1 to 10% by weight of AlN or 0.1 to 5% by weight of $TiO_2$; molding said powder mixture into a predetermined form and sintering the molded mixture in a non-oxidizing atmosphere at a temperature of 1,700 to 1,800°C to obtain a sintered ceramic body; and bonding said sintered ceramic body to a metal member by coating the surface of said ceramic body opposing the metal member with a lithium molybdate solution, heating the coated body to form a conductive layer, nickel plating said conductive layer and soldering the plated nickel layer with the metal member.

## Patentansprüche

1. Abnutzungsbeständiges Teil, umfassend einen gesinterten Keramikkörper und ein an den gesinterten Keramikkörper gebundenes Metallteil, wobei der gesinterte Keramikkörper im wesentlichen aus 0,1—15 Gew.-% mindestens einer Metallverbindung, ausgewählt aus der Gruppe Molybdäncarbid, Niobcarbid, Hafniumcarbid, Tantalcarbid, Molybdänsilicid, Niobsilicid, Hafniumsilicid, Tantalsilicid, Molybdänborid, Niobborid, Hafniumborid und Tantalborid, 2—20 Gew.-% einer Grenzphase, ausgewählt aus der Gruppe Si-Y-Al-O-N und Si-Y-Al-O-N-B, und zum Rest $\beta$-Siliziumnitrid sowie gegebenenfalls 0,1—10 Gew.-% AlN oder 0,1—5 Gew.-% $TiO_2$ besteht und dadurch an das Metallteil gebunden ist, daß die dem Metallteil gegenüberliegende Oberfläche des keramischen Körpers mit einer Lithiummolybdatlösung beaufschlagt, der beaufschlagte Körper zur Bildung einer leitenden Schicht erwärmt, die leitende Schicht nickelplattiert und schließlich die aufplattierte Nickelschicht mit dem Metallteil verlötet wird.

2. Verfahren zur Herstellung eines abnutzungsbeständigen Teils, umfassend einen gesinterten keramischen Körper und ein an den gesinterten keramischen Körper gebundenes Metallteil, gekennzeichnet durch folgende Stufen: Zubereiten eines Pulvergemischs, das im wesentlichen aus 0,1—15 Gew.-% mindestens eines Materials, ausgewählt aus der Gruppe Molybdän, Niob, Hafnium, Tantal, Molybdäncarbid, Niobcarbid, Hafniumcarbid, Tantalcarbid, Molybdänsilicid, Niobsilicid, Hafniumsilicid, Tantalsilicid, Molybdänborid, Niobborid, Hafniumborid und Tantalborid, 0,5—20 Gew.-% eines aus Yttriumoxid und Aluminiumoxid gebildeten Sinterungsbeschleunigers und zum Rest $\alpha$-Siliziumnitrid sowie gegebenenfalls 0,1—10 Gew.-% AlN oder 0,1—5 Gew.-% $TiO_2$ besteht, Sintern des Pulvergemischs in einer gegebenen Form bei einer Temperatur von 1600—1800°C und einem Druck von 50—500 $kg/cm^2$ zur Bildung eines gesinterten keramischen Körpers, Binden des gesinterten keramischen Körpers an ein Metallteil, indem die dem Metallteil gegenüberliegende Oberfläche des keramischen Körpers mit einer Lithiummolybdatlösung beaufschlagt, der beaufschlagte Körper zur Bildung einer leitenden Schicht erwärmt, die leitende Schicht nickelplattiert und schließlich die aufplattierte Nickelschicht mit dem Metallteil verlötet wird.

3. Verfahren zur Herstellung eines abnutzungsbeständigen Teils, umfassend einen gesinterten keramischen Körper und ein an den gesinterten keramischen Körper gebundenes Metallteil, gekennzeichnet durch folgende Stufen: Zubereiten eines Pulvergemischs, das im wesentlichen aus 0,1—15 Gew.-% mindestens eines Materials, ausgewählt aus der Gruppe Molybdän, Niob, Hafnium, Tantal, Molybdäncarbid, Niobcarbid, Hafniumcarbid, Tantalcarbid, Molybdänsilicid, Niobsilicid, Hafniumsilicid, Tantalsilicid, Molybdänborid, Niobborid, Hafniumborid und Tantalborid, 0,5—20 Gew.-% eines aus Yttriumoxid und Aluminiumoxid gebildeten Sinterungsbeschleunigers und zum Rest $\alpha$-Siliziumnitrid sowie gegebenenfalls 0,1—10 Gew.-% AlN oder 0,1—5 Gew.-% $TiO_2$, Ausformen des Pulvergemischs zu einer gegebenen Form und Sintern des ausgeformten Gemischs in einer nichtoxidierenden Atmosphäre bei einer Temperatur von 1700—1800°C zur Gewinnung eines gesättigten keramischen Körpers und Binden des gesinterten keramischen Körpers an ein Metallteil, indem die dem Metallteil gegenüberliegende Oberfläche des keramischen Körpers mit einer Lithiummolybdatlösung beaufschlagt, der beaufschlagte Körper zur Bildung einer leitenden Schicht erwärmt, die leitende Schicht nickelplattiert und schließlich die aufplattierte Nickelschicht mit dem Metallteil verlötet wird.

**Revendications**

1. Un élément résistant à l'usure comprenant un corps en céramique frittée et un élément métallique lié à ce corps en céramique frittée, ledit corps en céramique frittée consistant essentiellement en: 0,1 à 15% en poids d'au moins un composé métallique choisi dans le groupe comprenant les suivants: carbure de molybdène, carbure de niobium, carbure d'hafnium, carbure de tantale, siliciure de molybdène, siliciure de niobium, siliciure d'hafnium, siliciure de tantale, borure de molybdène, borure de niobium, borure d'hafnium et borure de tantale; 2 à 20% en poids d'une phase mitoyenne choisie dans le groupe comprenant Si-Y-Al-O-N et Si-Y-Al-O-N-B; le restant étant du nitrure de silicium β contenant éventuellement 0,1 à 10% en poids de AlN ou 0,1 à 5% en poids de $TiO_2$; ledit corps en céramique frittée étant lié audit élément métallique par revêtement de la surface du corps en céramique opposée à l'élément métallique par une solution de molybdate de lithium, chauffage du corps revêtu pour former une couche conductrice, nickelage de cette couche conductrice et soudure de la couche nickelée avec l'élément métallique.

2. Un procédé de fabrication d'un élément résistant à l'usure comprend un corps en céramique frittée et un élément métallique lié à ce corps en céramique frittée, ledit procédé comprenant les étapes: de préparation d'un mélange de poudres constitué essentiellement de 0,1 à 15% en poids d'au moins un matériau choisi dans le groupe comprenant les suivants: molybdène, niobium, hafnium, tantale, carbure de molybdène, carbure de niobium, carbure d'hafnium, carbure de tantale, siliciure de molybdène, siliciure de niobium, siliciure d'hafnium, siliciure de tantale, borure de molybdène, borure de niobium, borure d'hafnium, borure de tantale, 0,5 à 20% en poids d'un accélérateur de frittage formé d'oxyde d'yttrium et d'oxyde d'aluminium; et le restant étant du nitrure de silicium α contenant éventuellement 0,1 à 10% en poids de AlN ou 0,1 à 5% en poids de $TiO_2$; frittage dudit mélange de poudres dans un moule prédéterminé à une température de 1 600 à 1 800°C et à une pression de 50 à 500 kg/cm² pour obtenir un corps en céramique frittée; et liaison de ce corps en céramique frittée avec un élément métallique par revêtement de la surface dudit corps en céramique opposée à l'élément métallique à l'aide d'une solution de molybdate de lithium, chauffage du corps revêtu pour former une couche conductrice, nickelage de la couche conductrice et soudure de la couche nickelée avec l'élément métallique.

3. Un procédé de fabrication d'un élément résistant à l'usure comprenant un corps en céramique frittée et un élément métallique lié audit corps en céramique frittée, ledit procédé comprenant les étapes de: préparation d'un mélange de poudres constitué essentiellement de 0,1 à 10% en poids d'au moins un matériau choisi dans le groupe comprenant les suivants: molybdène, niobium, hafnium, tantale, carbure de molybdène, carbure de niobium, carbure d'hafnium, carbure de tantale, siliciure de molybdène, siliciure de niobium, siliciure d'hafnium, siliciure de tantale, borure de molybdène, borure de niobium, borure d'hafnium et borure de tantale, 0,5 à 20% en poids d'un accélérateur de frittage formé d'oxyde d'yttrium et d'oxyde d'aluminium; le restant étant du nitrure de silicium α contenant éventuellement 0,1 à 10% en poids de AlN ou 0,1 à 5% de $TiO_2$; moulage de ce mélange de poudres dans une forme prédéterminée et frittage du mélange moulé dans une atmosphère non oxydante à une température de 1 700 à 1 800°C pour obtenir un corps en céramique frittée; et liaison de ce corps en céramique frittée avec un élément métallique par revêtement de la surface dudit corps en céramique opposée à l'élément métallique à l'aide d'une solution de molybdate de lithium, chauffage du corps revêtu pour former une couche conductrice, nickelage de cette couche conductrice et soudure de la couche nickelée avec l'élément métallique.

0 133 289

F I G. 1

F I G. 2